# FASCICULE DE BREVET EUROPEEN

(11) **EP 2 673 472 B1**
(45) Date de publication et mention de la délivrance du brevet: **28.10.2015**
(21) Numéro de dépôt: 12707870.7
(22) Date de dépôt: 06.02.2012
(51) Int. Cl.: F01D 5/14, F04D 29/32

(54) **ENSEMBLE PALE-PLATEFORME POUR ECOULEMENT SUBSONIQUE**
SCHAUFELPLATTFORMANORDNUNG FÜR UNTERSCHALLSTRÖMUNGEN
BLADE-PLATFORM ASSEMBLY FOR SUBSONIC FLOW

(30) Priorité: 10.02.2011 FR 1151069
(43) Date de publication de la demande: 18.12.2013
(73) Titulaire: SNECMA, 75015 Paris (FR)
(72) Inventeur: CELLIER, Damien, F-75012 Paris (FR); PERROT, Vincent, Paul, Gabriel, F-94700 Maisons Alfort (FR); RIOS, Jean-François, F-77176 Nandy (FR)
(74) Mandataire: Duflos, Bertrand Guillaume
(86) Numéro de dépôt international: PCT/FR2012/050253
(87) Numéro de publication internationale: WO 2012/107676

(56) Documents cités:
- WO-A1-96/00841
- FR-A1- 2 928 174
- GB-A- 944 166
- US-A1- 2007 258 817
- US-A1- 2010 143 139
- US-A1- 2010 158 696

## Description

L'invention concerne un ensemble comportant une pale pour roue à aubes de turbomachine et une plateforme sur laquelle la pale doit être montée, l'ensemble ainsi formé étant agencé de telle sorte qu'une pluralité de pales fixées sur la plateforme ou sur une pluralité de plateformes assemblées ensemble, puissent former une roue à aubes. Par plateforme, on désigne ici une pièce qui délimite du côté radialement intérieur une veine inter-aubes formée entre deux pales adjacentes d'une roue à aubes. Par 'surface de plateforme', on désigne la surface de la plateforme qui est en regard de la veine inter-aubes. La surface de plateforme peut aussi désigner collectivement l'ensemble des surfaces de plateforme d'une roue à aubes.

De manière connue en soi, les pales d'une roue à aubes peuvent être formées intégralement avec le disque de rotor pour constituer une roue à aubes. La pièce ainsi formée, réunissant les pales et leurs plateformes, est dénommée 'Disque Aubagé Monobloc' ou DAM. Dans un autre mode de réalisation, les pales sont formées de manière indépendante du disque de rotor (c'est-à-dire qu'il s'agit de pièces distinctes). Dans ce cas, les pales sont formées avec un pied pour leur fixation sur le disque de rotor, et constituent ainsi des aubes. L'assemblage des aubes sur le disque de rotor permet alors de constituer une roue à aubes.

L'invention vise un agencement avantageux de la pale en relation avec la surface de plateforme ; un tel agencement peut être mis en oeuvre dans les différents modes de réalisation présentés précédemment, indépendamment du fait que la plateforme et la pale constituent ou non des pièces distinctes.

L'invention vise plus particulièrement la réalisation d'ensembles tels que présentés précédemment pour former des roues à aubes de compresseurs (haute pression ou basse pression), et notamment de compresseurs multi-étages, implantés dans des turbomachines ou dans des turbomoteurs d'hélicoptères. L'invention peut en outre également être mise en oeuvre pour réaliser des aubes ou roues à aubes de turbines de turbomachines (haute pression ou basse pression).

Le rendement aérodynamique d'un étage de compresseur (égal au ratio entre le travail idéal (c'est-à-dire le travail associé à une transformation isentropique) et le travail réellement fourni au fluide pour obtenir une augmentation de pression donnée entre l'amont et l'aval de l'étage de compresseur) dans une turbomachine dépend non seulement de la forme des pales, mais également de la forme des plateformes. Pour améliorer ce rendement, il est connu de modifier la surface de plateforme dans une ou plusieurs roues à aubes pour augmenter ou réduire localement la section de passage du flux de fluide à travers la ou les roues à aubes. Dans ce but, de manière connue on modifie la plateforme en aménageant dans la surface de celle-ci au niveau des pales, une dépression circonférentielle, et/ou une plage bombée circonférentielle. (Le terme dépression ou plage bombée 'circonférentielle' désigne ici une dépression ou plage bombée ayant sensiblement une forme de révolution, hormis naturellement au voisinage immédiat des pales). Une telle modification, appelée 'contouring', permet d'améliorer le rendement aérodynamique de la roue à aube et plus globalement de l'étage de compresseur. Les termes 'dépression' et 'plage bombée' doivent se comprendre en référence à une surface théorique délimitant radialement intérieurement la veine et évoluant linéairement de l'amont à l'aval de la roue à aubes.

Des roues à aubes dans lesquelles les surfaces de plateforme présentent des modifications de ce type sont présentées par les documents GB 944 166 A, US2007/258817 A1, WO 96/00841 A1, US 2010/158696 A1, US 2010/143139 A1, FR 2 928 174 A1.

Cependant, malgré l'augmentation de rendement ainsi obtenue pour la roue à aube, une telle modification entraîne généralement également certains effets indésirables sur le flux de fluide. En effet :
- elle peut induire des gradients de pression élevés en sortie de la roue à aubes ; de tels gradients étant préjudiciables au fonctionnement de la roue à aubes, notamment au fonctionnement global de la turbomachine, en particulier dans le cas de compresseurs multi-étages ;
- elle peut induire des disparités dans les répartitions de vitesse autour des pales, et notamment au voisinage du pied de celles-ci ; et
- elle peut enfin induire une modification du taux de compression de la roue (le taux de compression étant égal au rapport entre les pressions en amont et en aval de la roue à aubes).

Lorsque de tels effets secondaires indésirables sont constatés, on y remédie généralement en modifiant la géométrie des roues à aubes situées dans la veine de fluide en aval de la roue à aubes considérée. Cependant, ces modifications peuvent ne pas permettre de conserver le gain en rendement permis par la modification de la surface de plateforme de la roue à aubes considérée ; en outre, il n'est pas toujours possible de réaliser de telles modifications.

L'objectif de l'invention est de remédier à de tels inconvénients en proposant un ensemble comportant une pale pour roue à aubes de turbomachine et une plateforme sur laquelle la pale est apte à être montée ;
- une pluralité desdites pales étant aptes à être fixées sur ladite plateforme ou sur une pluralité desdites plateformes assemblées ensemble, de manière à former une roue à aubes présentant un axe de roue et définissant suivant celui-ci des directions amont et aval, roue dans laquelle les pales sont disposées radialement ;
- dans ladite roue, la plateforme ou les plateformes assemblées présentant entre les pales une surface dite surface de plateforme, délimitant radialement du côté intérieur des veines de passage de gaz formées entre les pales ;
la surface de plateforme présentant une dépression circonférentielle, s'étendant axialement sensiblement entre un bord d'attaque de la pale en amont et au plus 60% d'une étendue axiale de la pale en aval ;
ensemble qui confère un bon rendement aérodynamique à la roue à aubes, assure des gradients de pression en aval de la roue à aubes similaires à ceux qui seraient constatés en l'absence de la dépression circonférentielle de la surface de plateforme, et permette d'obtenir des répartitions de vitesse du fluide relativement homogènes, notamment au voisinage du pied d'aube.

Afin de présenter la solution apportée par l'invention, on définit les éléments suivants :
Le voisinage de la plateforme vise la partie de la pale située à faible distance (par exemple, à moins de 20% de la hauteur de la pale) au dessus des congés de raccordement entre la pale et la plateforme. L'angle squelette est l'angle que forme la fibre neutre de la pale par rapport à l'axe de la roue à aubes, dans un plan perpendiculaire à la direction longitudinale de la pale, le signe de l'angle squelette étant choisi de telle sorte que l'angle squelette amont (angle squelette au bord d'attaque de la pale) soit positif. La courbe de squelette est la courbe représentant les variations d'un angle squelette de la pale dans un plan de section sensiblement parallèle à la surface de plateforme, en fonction de la position suivant l'axe de la roue. La courbe de squelette linéarisé est la courbe représentative des variations d'un angle en fonction de la position suivant l'axe de la roue, qui relie en ligne droite les points représentant l'angle squelette respectivement à 10% et à 90% de l'étendue axiale de la pale à partir du bord d'attaque. L'angle squelette linéarisé, représenté par la courbe de squelette linéarisé, est donc égal à l'angle squelette à 10% et à 90% de l'étendue axiale de la pale à partir du bord d'attaque (les extrémités amont et aval de la pale, qui peuvent faire l'objet d'aménagements spécifiques, ne sont pas prises en compte).

L'objectif indiqué précédemment est atteint selon l'invention grâce au fait que, dans un ensemble tel qu'indiqué précédemment, dans un voisinage de la plateforme, une partie abaissée de la courbe de squelette se trouvant sous la courbe de squelette linéarisé s'étend axialement sur au moins la moitié de l'étendue axiale de ladite dépression.

Ainsi, l'invention consiste à modifier localement la forme de la pale de manière à abaisser la courbe de squelette (ce qui revient à 'ouvrir' l'angle squelette, dans le sens où l'angle squelette dans la section considérée diminue en valeur absolue par rapport à la courbe de squelette linéarisé), au droit d'au moins la moitié de la dépression circonférentielle (et donc sur une plage en recouvrement axial avec celle-ci), afin d'adapter la pale à la modification du flux induite par la dépression circonférentielle aménagée dans la plateforme. L'aménagement de la pale au voisinage de la plateforme permet un fonctionnement optimal de la roue à aubes, prenant en compte la modification de la surface de plateforme constituée par la dépression circonférentielle.

L'étendue axiale de la pale désigne la distance, mesurée au pied de pale et suivant l'axe de la roue à aubes, entre le bord d'attaque et le bord de fuite de la pale. La dépression circonférentielle ne s'étend pas axialement au delà de 60% de l'étendue axiale de la pale

Dans un ensemble selon l'invention, du fait de la partie abaissée que présente la courbe d'évolution de l'angle squelette ou courbe squelette, sur une partie radialement inférieure de la pale, le flux de gaz ou d'air est dévié de manière à ralentir, dans le repère relatif à l'aube, au niveau de la dépression circonférentielle. L'ouverture de veine induite par la dépression circonférentielle facilite la diffusion au voisinage du pied d'aube ce qui permet, tout en recalant cette diffusion à sa valeur avant l'aménagement de la dépression circonférentielle :
- dans la partie amont de la pale, de limiter l'augmentation de vitesse du flux de fluide, et ainsi de réduire les pertes par onde de choc (grâce à l'ouverture de l'angle squelette, notamment dans la plage s'étendant de 0 à 40% de l'étendue axiale de la pale).
- dans la partie aval de la pale, de réduire l'écart flux profil (écart entre la direction du flux au voisinage du bord de fuite et l'angle squelette aval) en limitant localement la déviation imposée au fluide.

L'ensemble selon l'invention peut faire l'objet des perfectionnements suivants :
- la dépression circonférentielle peut s'étendre axialement sensiblement entre le bord d'attaque en amont et seulement 40% de l'étendue axiale de la pale en aval.
- la section la plus creuse de ladite dépression peut être située axialement entre 15% et 35% de l'étendue axiale de la pale, à partir du bord d'attaque de la pale.
- la surface de plateforme peut présenter une plage circonférentielle bombée, située axialement dans la moitié aval de la pale.
- une section la plus en saillie de la plage bombée peut être située axialement entre 50% et 70% de l'étendue axiale de la pale, à partir du bord d'attaque de la pale.
- dans ledit voisinage, la courbe squelette peut présenter une partie rehaussée se trouvant au dessus de la courbe d'angle squelette linéarisé et située axialement en aval de ladite partie abaissée. Cette partie rehaussée peut se trouver axialement sensiblement au niveau de ladite plage bombée, et éventuellement s'étendre axialement sur toute l'étendue axiale de la plage bombée. Le fait que la partie rehaussée soit axialement sensiblement au niveau de la plage bombée signifie que l'écart entre les limites de la partie rehaussée et de la partie bombée (suivant l'axe de la roue à aubes), est inférieur à 10% que ce soit en amont ou en aval.
- la courbe squelette peut présenter une pente plus faible, en valeur absolue, que la courbe de squelette linéarisé entre 80% et 100%, et de préférence entre 60% et 100%, de l'étendue axiale de la pale à partir du bord d'attaque de celle-ci. Cet agencement permet de réduire l'écart flux profil au niveau du bord de fuite de la pale. Dans un mode de réalisation, la courbe squelette peut notamment être située sous la courbe squelette linéarisé entre 10% et 90% de l'étendue axiale de la pale.
- un angle squelette amont étant l'angle squelette au bord d'attaque de la pale, dans un quart radialement inférieur de la pale, l'angle squelette amont peut augmenter en valeur absolue (on dit qu'il y a fermeture de l'angle amont de la pale), au fur et à mesure que l'on s'approche du pied de pale. Cette disposition du bord d'attaque de la pale contribue à réduire ou éliminer les effets négatifs induits par la dépression circonférentielle de la surface de plateforme.

Un deuxième objectif de l'invention est de proposer une aube pour turbomachine, qui confère un bon rendement aérodynamique à une roue à aubes formée à l'aide de telles aubes, assure des gradients de pression en aval de la roue à aubes similaires à ceux qui seraient constatés en l'absence de la dépression circonférentielle de la surface de plateforme, et permette d'obtenir des répartitions de vitesses relativement homogènes, notamment au voisinage du pied d'aube.

Cet objectif est atteint grâce au fait que l'aube pour turbomachine est constituée par un ensemble tel que défini précédemment, comprenant une plateforme formée intégralement avec au moins une pale. Les plateformes de ces aubes sont en général agencées de telle sorte qu'elles définissent entièrement la surface inter-aubes délimitant radialement du côté intérieur des veines de passage de gaz formées entre les pales.

Un troisième objectif de l'invention est de proposer une roue à aubes pour turbomachine, qui présente un bon rendement aérodynamique, des gradients de pression en aval de la roue à aubes similaires à ceux qui seraient constatés en l'absence de la dépression circonférentielle de la surface de plateforme, et des répartitions de vitesses relativement homogènes, notamment au voisinage du pied d'aube.

Cet objectif est atteint grâce au fait que la roue à aubes est formée avec des ensembles tels que définis précédemment, et notamment avec des aubes comprenant une plateforme formée intégralement avec au moins une pale. Un disque à aubes monobloc constitue un exemple d'une telle roue à aubes.

Enfin, l'invention peut avantageusement être intégrée dans une turbomachine comprenant au moins une roue à aubes telle que définie précédemment.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
la figure 1 est une vue schématique en perspective d'un étage de compresseur d'une turbomachine selon l'invention ;
la figure 2 est une vue schématique en perspective de trois ensembles selon l'invention, faisant partie de la roue présentée en figure 1 ;
   chacune des figures 3A et 3B est une figure représentant un ensemble comprenant une plateforme associée à une pale, et comprenant :
   (a) une vue schématique dudit ensemble suivant la direction circonférentielle ;
   (b) un diagramme montrant la courbe de squelette de la pale dudit ensemble ;
la figure 3A présentant un ensemble connu, et la figure 3B un ensemble selon l'invention dans un premier mode de réalisation ;
la figure 4 est un diagramme montrant deux variantes pour la courbe de squelette d'une pale d'un ensemble selon l'invention, correspondant respectivement au premier mode de réalisation et à un deuxième mode de réalisation ;
la figure 5 est une section d'une pale d'un ensemble selon l'invention ; et
la figure 6 est un diagramme montrant la courbe des variations de l'angle squelette amont d'une pale dans un mode de réalisation de l'invention.

Dans les différentes figures, les éléments identiques ou similaires comportent la même référence.

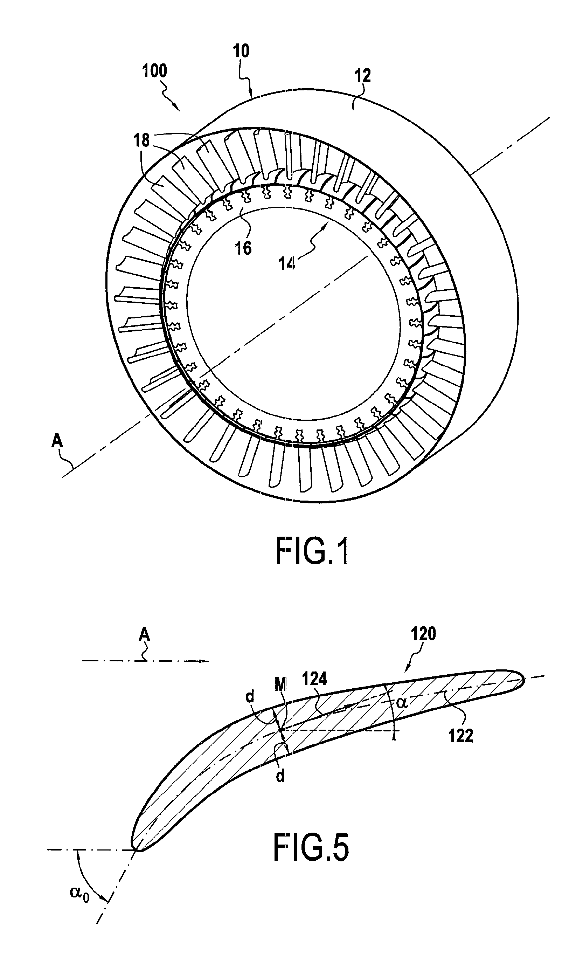

La figure 1 représente une partie d'un compresseur à flux axial 10 d'une turbomachine 100. Ce compresseur 10 comprend un carter 12, dans lequel est montée une roue à aubes 14. La roue à aubes 14 comprend elle-même un disque rotor 16, sur lequel sont fixées de manière connue en soi des aubes radiales 18, de manière axisymétrique. La roue à aubes est agencée de manière à pouvoir tourner suivant un axe de rotation A à l'intérieur du carter 12.

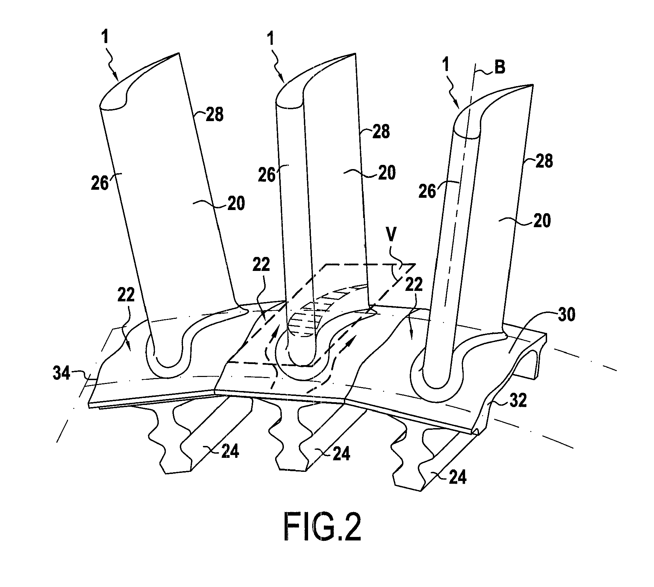

L'agencement des aubes 18 de la roue à aubes 14 est présenté plus en détail par la figure 2, qui est une vue partielle de la roue 14.

Dans la roue 14, chacune des aubes 18 forme un ensemble 1, associant une pale 20, une plateforme 22, et un pied d'aube 24. Les plateformes d'aubes 22 sont ainsi réalisées de manière intégrée avec les pales 20. Naturellement, l'invention peut être mise en oeuvre dans d'autres types de roues, dans lesquelles les pales et la ou les plateforme(s) constituent des pièces distinctes.

Les pieds 24 permettent la fixation des aubes 18 sur le disque rotor 16.

Les plateformes 22 associées au sein de la roue à aubes 14 définissent une surface de plateforme 30 qui délimite du côté radialement intérieur les veines inter-aubes permettant le passage de gaz entre les aubes. Cette surface de plateforme est approximativement une surface de révolution - ou du moins peut être approximée par une surface de révolution -.

Les aubes 18 sont agencées de telle sorte que, lorsqu'elles sont assemblées ensemble de manière à former la roue 14, les plateformes des aubes définissent entièrement la surface de plateforme 30 formée entre les pales 20. Aussi, aucune pièce supplémentaire ne fait partie de ou ne forme la surface de plateforme 30. Pour permettre l'assemblage des aubes 18, le bord 32 des surfaces de plateforme sur un premier côté suivant la direction circonférentielle de la roue à aubes est de forme complémentaire à la forme du bord 34 des surfaces de plateforme situé du côté opposé suivant la direction circonférentielle C.

Chaque pale 20 comporte un bord d'attaque 26 et un bord de fuite 28, et s'étend radialement suivant une direction radiale B propre à chaque pale.

Sur la figure 2 est indiqué un plan de coupe V, qui constitue un plan de section sensiblement parallèle à la surface de plateforme 30, et est situé au voisinage du pied de la pale 20.

La figure 5 représente une coupe d'une pale 120 d'aube de turbomachine, dans un plan perpendiculaire à l'axe longitudinal de la pale.

Dans cette coupe apparaît la fibre neutre 122 de la pale, pour le plan considéré. La fibre neutre est l'ensemble des points de la pale équidistants des deux faces latérales (intrados et extrados) de la pale. Par exemple le point M représenté est à la même distance d de l'intrados et de l'extrados. L'angle squelette α au point M est l'angle entre la tangente 124 à la fibre neutre au point M, et l'axe A de la roue. L'angle squelette α0 ou angle squelette amont est l'angle squelette au bord d'attaque de la pale 120.

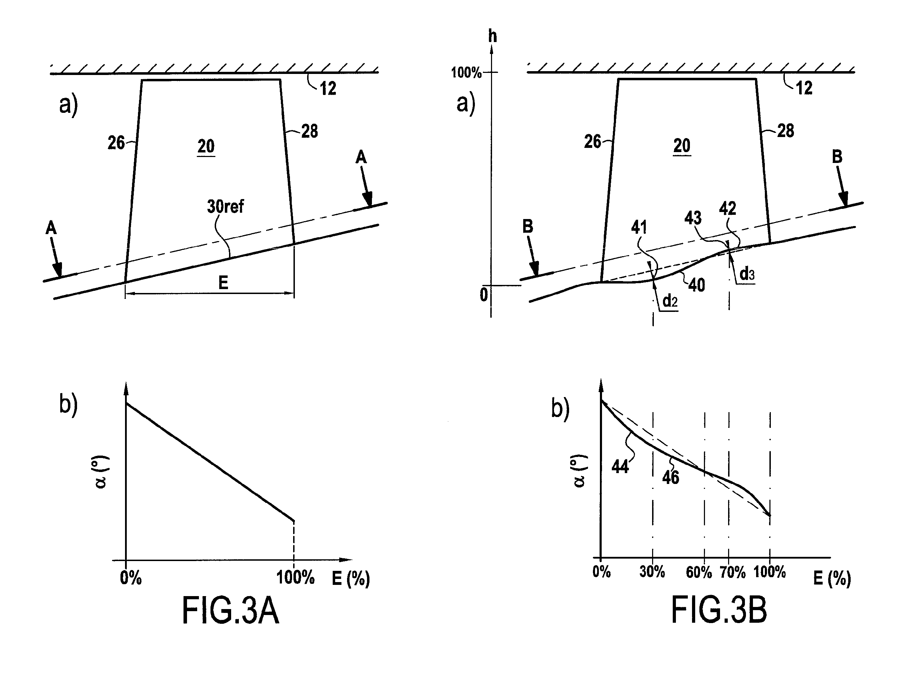

Les figures 3A et 3B présentent respectivement un ensemble 1 (associant une plateforme 22 et une pale 20) respectivement dans un mode de réalisation connu, et dans un mode de réalisation selon l'invention.

### Figure 3A :

La surface de plateforme 30 représentée sur la figure 3A(a) n'a fait l'objet d'aucun aménagement spécifique au niveau (axialement, c'est-à-dire suivant l'axe A) de la pale 20. Cette surface de plateforme est donc une surface de plateforme de référence 30_{ref} qui est sensiblement conique.

Sur la figure 3Ab est tracée la courbe des variations de l'angle squelette de la pale de la figure 3A(a), dans le plan A-A (plan indiqué en trait mixte sur la figure 3Aa)), en fonction de la position axiale suivant l'axe de la roue 14. La position axiale est indiquée en pourcentage, en fonction de la position par rapport à l'étendue axiale E de la pale 20. L'étendue axiale E est la distance séparant suivant l'axe A le bord d'attaque 26 du bord de fuite 28, au pied des pales 20 (fig 3A.a)). La pale 20 de l'ensemble de la figure 3A est une pale type dont les courbes de squelette et de squelette linéarisé, représentées sur la figure 3Ab, sont confondues.

### Figure 3B :

La figure 3B représente un mode de réalisation de l'invention. Dans celui-ci, la surface de plateforme 30 a été aménagée au niveau de la pale 20.

Les aménagements réalisés se définissent radialement de manière relative, par rapport à la surface de plateforme de référence 30_{ref}. Cette surface 30_{ref} se définit comme la surface sensiblement conique approchant la surface de plateforme 30, cette surface de référence 30_{ref} étant déterminée sans prendre en compte ni la dépression circonférentielle ni le cas échéant d'autres aménagements localisés (circonférentiels ou non) en saillie ou en creux de la surface de plateforme effectués axialement au niveau des pales 20.

Les aménagements de la surface de plateforme 30 et des pales 20 se définissent d'autre part axialement par rapport à l'étendue axiale E des pales 20.

La surface de plateforme 30 est aménagée (fig.3B.a)) avec une dépression circonférentielle 40. Par dépression (ou respectivement, par surface bombée ou surconvergente), on désigne une partie de la surface de plateforme se trouvant radialement à l'intérieur (ou respectivement, à l'extérieur) de la surface de plateforme de référence 30ref et correspondant à une réouverture (ou respectivement à une fermeture) locale de la veine.

La dépression circonférentielle 40 s'étend axialement entre le bord d'attaque 26 des pales 20 et jusqu'à 60% de l'étendue axiale E des pales (suivant l'axe A). En fait la dépression 40 s'étend presque jusqu'à 60% de l'étendue axiale E. La section axiale 41 (perpendiculaire à l'axe de la roue 14) la plus creuse de cette dépression 40 est située axialement entre 15% et 35% de l'étendue axiale E, et en l'occurrence à 30% de l'étendue axiale E. Dans la phrase précédente, la section 'la plus creuse' désigne la section de la dépression 40 dont la distance d2 par rapport à la surface de plateforme de référence 30_{ref} est la plus grande (voir fig.3Ba).

D'autre part, la surface de plateforme présente une plage circonférentielle bombée 42, dite aussi surconvergente, située axialement dans la moitié aval de la pale. La section 43 la plus en saillie de cette plage bombée 42 est située axialement entre 50% et 70% de l'étendue axiale de la pale, à partir du bord d'attaque de la pale, en l'occurrence à 70% de l'étendue axiale E. Dans la phrase précédente, la section 'la plus en saillie' désigne la section de la plage circonférentielle 42 dont la distance d3 par rapport à la surface de plateforme de référence 30_{ref} est la plus grande.

Les aménagements 40 et 42 indiqués précédemment améliorent le rendement de la roue à aubes 14. Inversement, ils perturbent l'écoulement du fluide au voisinage de la surface de plateforme, par rapport à l'écoulement que permet la surface de plateforme théorique 30_{ref}. Selon l'invention, pour compenser ces perturbations, la forme des pales 20 est modifiée de la manière présentée par les figures 3B (b) et 4.

Cette modification affecte (de manière générale) principalement la moitié radialement intérieure des pales 20. Cette modification apparaît notamment dans un plan de coupe de la pale (plan V, figure 2) qui est parallèle à la surface de plateforme, et situé au voisinage de la plateforme.

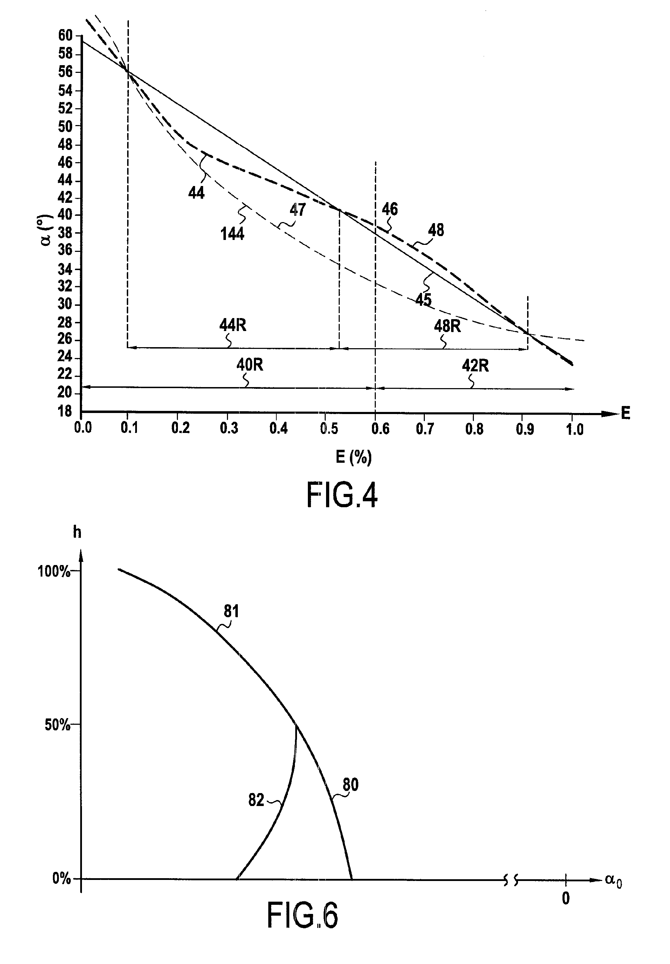

Cette modification est présentée sur la figure 4 sur laquelle apparaissent :
- en pointillés, la courbe de squelette 46, représentant les variations de l'angle squelette α de la pale 20 du premier mode de réalisation de l'invention (figure 3B) ;
- en trait mixe, la courbe de squelette 47, représentant les variations de l'angle squelette α d'une pale dans un second mode de réalisation de l'invention ; et
- en trait continu, la courbe de squelette linéarisé 45 de la pale 20, qui représente les variations de l'angle squelette linéarisé et est la même pour les deux modes de réalisation.

Dans ces différentes courbes, les variations de l'angle squelette α sont représentées en fonction de la position axiale sur la pale, cette position axiale étant indiquée sous forme de pourcentage par rapport à l'étendue axiale E de la pale 20.

Dans les deux modes de réalisation, la forme de la surface de plateforme est la même et est illustrée par la figure 3B.

La modification apportée selon l'invention à la pale 20 consiste dans le fait que la courbe d'angle squelette présente une partie abaissée s'étendant axialement sur au moins la moitié de l'étendue axiale de la dépression circonférentielle 40. (Par partie abaissée, on entend une partie de courbe se trouvant sous la courbe d'angle squelette linéarisé : en d'autres termes, dans la partie abaissée, l'angle squelette est inférieur en valeur absolue, et est plus ouvert, par rapport à l'angle squelette linéarisé). Cette partie abaissée est notée 44 et 144 respectivement pour le premier et le deuxième mode de réalisation.

Dans les modes de réalisation présentés, la dépression 40 s'étend sur une plage 40R allant de 0% à 60% de l'étendue axiale E. Selon l'invention, la courbe 46 présente une partie abaissée 44 s'étendant axialement sur une plage 44R couvrant au moins 30% de l'étendue axiale de la plage 40R (de 0% à 60%) de la dépression 40. Ainsi, dans le premier mode de réalisation, la plage 44R s'étend de 10% à 53% environ de l'étendue axiale E.

La plage 44R peut être incluse axialement dans la plage 40R recouverte par la dépression 40 ou s'étendre plus loin en aval que cette plage. Dans un mode de réalisation, la totalité de la partie abaissée 44 se trouve au niveau de la dépression 40, et la plage 44R est incluse dans la plage 40R. Inversement, dans le deuxième mode de réalisation, la partie abaissée 144 s'étend sur presque la totalité de l'extension axiale de la pale, et notamment de 10% à 90% de l'extension axiale de la pale.

D'autre part, la courbe de squelette 46 représentée sur la figure 4, qui présente la conformation de la pale 20 au voisinage de la plateforme, présente en plus de la partie abaissée 44, une partie réhaussée 48. Par 'partie réhaussée', on désigne ici une partie de courbe se trouvant au dessus de la courbe d'angle squelette linéarisé 45. Cette partie rehaussée 48 est située axialement en aval de la partie abaissée 44. Dans l'exemple représenté, la plage 42R sur laquelle s'étend la partie bombée 42 s'étend entre 60% et 100% de l'étendue axiale E, et la plage 48R sur laquelle s'étend la partie rehaussée 48 s'étend entre 53% et 90% de l'étendue axiale E. Ainsi, la plage bombée 42 et la partie rehaussée 48 de la section de la pale sont situées axialement sensiblement au même niveau.

De manière générale, selon le mode de réalisation (voir figure 4), la partie rehaussée 48 peut commencer du côté amont entre 40% et 60% de l'extension axiale de la pale. Du côté aval, elle peut se prolonger sensiblement jusqu'à 90% de l'étendue axiale E, point où par construction les courbes 45, 46 et 47 se croisent. La présence de cette partie rehaussée 48 vise à limiter les effets éventuels sur l'écart flux-profil induits par la partie abaissée 44. La partie rehaussée 48 s'étend de préférence sur au moins 30% de l'extension axiale de la pale, et de préférence au moins 40%.

Dans le deuxième mode de réalisation contrairement au premier, la courbe de squelette 47 ne comporte pas de partie rehaussée en aval de la partie abaissée. Au contraire, la courbe de squelette reste sous la courbe de squelette linéarisé, avec une partie abaissée 144 s'étendant sur presque la totalité de l'étendue axiale de la pale (entre 10% et 90%). Il s'ensuit que la courbe squelette 47 présente une pente plus faible, en valeur absolue, que la courbe de squelette linéarisé entre 80% et 100%, et même, dans ce mode de réalisation, entre 60% et 100%, de l'étendue axiale E de la pale à partir du bord d'attaque de celle-ci.

La figure 6 présente un aménagement complémentaire possible de la pale, permettant de compenser les effets indésirables causés par les aménagements de la surface de plateforme 30. La figure 6 représente les variations de l'angle squelette amont α0 d'une pale, en fonction de la hauteur h exprimée en pourcentage de la hauteur totale de la pale, mesurée du pied de pale à l'extrémité de la pale.

Dans ce mode de réalisation, dans une moitié radialement inférieure de la pale, l'angle squelette amont α0 (fig.5) se distingue des angles squelette amont utilisés de manière connue. Dans la moitié inférieure de la pale, les évolutions de l'angle squelette sont représentées par la courbe 80 pour un angle squelette amont typique, utilisé de manière connue, et par la courbe 82 pour l'angle squelette amont selon un mode de réalisation de l'invention. Dans la moitié supérieure de l'aube, ces deux courbes sont confondues en une courbe 81.

De manière habituelle les pales sont agencées de telle sorte que l'angle squelette amont diminue en valeur absolue du sommet de pale (h=100%, h étant la distance radiale par rapport au pied de pale) jusqu'au pied de pale (h=0%). A l'inverse, selon ce perfectionnement de l'invention, dans un quart inférieur de la pale et éventuellement dans une plage de 40% de la hauteur de pale s'étendant à partir du pied de pale, l'angle squelette amont augmente en valeur absolue (c'est-à-dire que l'angle squelette se ferme) au fur et à mesure que l'on s'approche du pied de pale. Cette modification vise à compenser l'augmentation de débit localisée en pied de pale causée par le contouring de veine. Elle permet de plus de protéger l'aube d'une éventuelle perte de marge au pompage.

L'invention est particulièrement adaptée pour des aubes appelées à fonctionner dans un écoulement subsonique.

## Revendications

1. Ensemble (1) comportant une pale (20) pour roue à aubes de turbomachine et une plateforme (22) sur laquelle la pale est apte à être montée ;
une pluralité desdites pales étant aptes à être fixées sur ladite plateforme ou sur une pluralité desdites plateformes assemblées ensemble, de manière à former une roue à aubes (14) présentant un axe de roue (A) et définissant suivant celui-ci des directions amont et aval, roue dans laquelle les pales sont disposées radialement ;
dans ladite roue, la plateforme (22) ou les plateformes assemblées présentant entre les pales une surface (30) dite surface de plateforme, délimitant radialement du côté intérieur des veines de passage de gaz formées entre les pales ;
ladite surface de plateforme présentant une dépression circonférentielle (40), s'étendant axialement sensiblement entre un bord d'attaque de la pale en amont et au plus 60% d'une étendue axiale de la pale en aval,
l'ensemble **se caractérisant en ce que**,
une courbe de squelette étant la courbe représentant les variations d'un angle squelette (α) de la pale dans un plan de section sensiblement parallèle à la surface de plateforme, en fonction de la position suivant l'axe de la roue,
une courbe de squelette linéarisé (45) étant la courbe représentative des variations d'un angle en fonction de la position suivant l'axe de la roue, qui relie en ligne droite les points représentant l'angle squelette respectivement à 10% et à 90% de l'étendue axiale de la pale à partir du bord d'attaque,
dans un voisinage de la plateforme, une partie abaissée (44) de la courbe de squelette se trouvant sous la courbe (45) de squelette linéarisé s'étend axialement sur au moins la moitié de l'étendue axiale (40R) de ladite dépression.

2. Ensemble selon la revendication 1, dans lequel la dépression circonférentielle s'étend axialement sensiblement entre le bord d'attaque en amont et seulement 40% de l'étendue axiale de la pale en aval.

3. Ensemble selon la revendication 1 ou 2, dans lequel la section la plus creuse de ladite dépression (40) est située axialement entre 15% et 35% de l'étendue axiale de la pale, à partir du bord d'attaque de la pale.

4. Ensemble selon l'une quelconque des revendications 1 à 3, dans lequel ladite surface de plateforme présente une plage circonférentielle bombée (42), située axialement dans la moitié aval de la pale.

5. Ensemble selon l'une quelconque des revendications 1 à 4, dans lequel une section la plus en saillie (43) de ladite plage bombée est située axialement entre 50% et 70% de l'étendue axiale de la pale, à partir du bord d'attaque de la pale.

6. Ensemble selon l'une quelconque des revendications 1 à 5, dans lequel dans ledit voisinage, la courbe squelette présente une partie rehaussée (48) se trouvant au dessus de la courbe d'angle squelette linéarisé et située axialement en aval de ladite partie abaissée.

7. Ensemble selon la revendication 6, dans lequel ladite partie rehaussée (48) se trouve axialement sensiblement au niveau de ladite plage bombée.

8. Ensemble selon l'une quelconque des revendications 1 à 5, dans lequel la courbe squelette présente une pente plus faible, en valeur absolue, que la courbe de squelette linéarisé entre 80% et 100%, et de préférence entre 60% et 100%, de l'étendue axiale de la pale à partir du bord d'attaque de celle-ci.

9. Ensemble selon l'une quelconque des revendications 1 à 8, dans lequel un angle squelette amont étant l'angle squelette au bord d'attaque de la pale, dans un quart radialement inférieur de la pale, ledit angle squelette amont augmente en valeur absolue, au fur et à mesure que l'on s'approche du pied de pale.

10. Aube (18) pour turbomachine constituée par un ensemble selon l'une quelconque des revendications 1 à 9, comprenant une plateforme formée intégralement avec au moins une pale.

11. Roue à aubes (14) pour turbomachine formée avec des aubes selon la revendication 10.

12. Roue à aubes (14) pour turbomachine formée avec au moins un ensemble selon l'une quelconque des revendications 1 à 9.

13. Turbomachine (100), comprenant au moins une roue à aubes selon la revendication 11 ou 12.

## Patentansprüche

1. Einheit (1), umfassend eine Schaufel (20) für ein Schaufelrad einer Turbomaschine und eine Plattform (22), auf der die Schaufel montiert werden kann,
- wobei eine der Schaufeln geeignet ist, auf der Plattform oder auf einer Vielzahl der miteinander verbundenen Plattformen befestigt zu werden, um ein Schaufelrad (14) zu bilden, das eine Radachse (A) aufweist und entlang derselben stromaufwärtige und stromabwärtige Richtungen definiert, wobei in dem Rad die Schaufeln radial angeordnet sind,
- wobei in dem Rad die Plattform (22) oder die zusammengefügten Plattformen zwischen den Schaufeln eine Fläche (30), Plattformfläche genannt, aufweisen, die radial auf der Innenseite Gasdurchgangskanäle, die zwischen den Schaufeln ausgebildet sind, begrenzen,
- wobei die Plattformfläche eine Vertiefung (40) in Umfangsrichtung aufweist, die sich axial im Wesentlichen zwischen einer Angriffskante der Schaufel stromaufwärts und höchstens 60 % einer Axialausdehnung der Schaufel stromabwärts erstreckt, wobei die Einheit **dadurch gekennzeichnet ist, dass**
eine Skelettkurve die Kurve ist, die die Variationen eines Skelettwinkels (α) der Schaufel in einer Schnittebene im Wesentlichen parallel zur Plattformfläche in Abhängigkeit von der Position entlang der Achse des Rades darstellt,
eine linearisierte Skelettkurve (45) die Kurve ist, die für die Variationen eines Winkels in Abhängigkeit von der Position entlang der Achse des Rades repräsentativ ist, die die Punkte, die den Skelettwinkel bei 10% bzw. 90% der Axialausdehnung der Schaufel von der Angriffskante aus darstellen, in einer geraden Linie verbindet,
sich in einer Nähe der Plattform ein abgesenkter Teil (44) der Skelettkurve, der sich unter der linearisierten Skelettkurve (45) befindet, axial auf mindestens der Hälfte der Axialausdehnung (40R) der Vertiefung erstreckt.

2. Einheit nach Anspruch 1, bei der sich die Vertiefung in Umfangsrichtung axial im Wesentlichen zwischen der Angriffskante stromaufwärts und nur 40% der Axialausdehnung der Schaufel stromabwärts erstreckt.

3. Einheit nach Anspruch 1 oder 2, bei der der am meisten nach innen gewölbte Querschnitt der Vertiefung (40) axial zwischen 15 % und 35 % der Axialausdehnung der Schaufel von der Angriffskante der Schaufel aus angeordnet ist.

4. Einheit nach einem der Ansprüche 1 bis 3, bei der die Plattformfläche einen bombierten Umfangsbereich (42) aufweist, der sich axial in der stromabwärtigen Hälfte der Schaufel befindet.

5. Einheit nach einem der Ansprüche 1 bis 4, bei der ein am meisten nach außen gewölbte Querschnitt (43) des bombierten Bereichs axial zwischen 50 % und 70 % der Axialausdehnung der Schaufel von der Angriffskante der Schaufel aus angeordnet ist.

6. Einheit nach einem der Ansprüche 1 bis 5, bei der in dieser Nähe die Skelettkurve einen überhöhten Teil (48) aufweist, der sich über der Kurve eines linearisierten Skelettwinkels befindet und axial stromabwärts zu dem abgesenkten Teil angeordnet ist.

7. Einheit nach Anspruch 6, bei der sich der überhöhte Teil (48) axial im Wesentlichen auf Höhe des bombierten Bereichs befindet.

8. Einheit nach einem der Ansprüche 1 bis 5, bei der die Skelettkurve ein geringeres Gefälle im Absolutwert als die linearisierte Skelettkurve zwischen 80 % und 100 % und vorzugsweise zwischen 60 % und 100 % der Axialausdehnung der Schaufel von der Angriffskante derselben aus aufweist.

9. Einheit nach einem der Ansprüche 1 bis 8, bei der ein stromaufwärtiger Skelettwinkel der Skelettwinkel an der Angriffskante der Schaufel in einem radial unteren Viertel der Schaufel ist, wobei der stromaufwärtige Skelettwinkel im Absolutwert im Zuge der Annäherung an den Schaufelfuß an Wert zunimmt.

10. Schaufel (18) für eine Turbomaschine, die von einer Einheit nach einem der Ansprüche 1 bis 9 gebildet ist, umfassend eine Plattform, die zur Gänze mit mindestens einer Schaufel gebildet ist.

11. Schaufelrad (14) für eine Turbomaschine, die mit Schaufeln nach Anspruch 10 gebildet ist.

12. Schaufelrad (14) für eine Turbomaschine, die mit mindestens einer Einheit nach einem der Ansprüche 1 bis 9 gebildet ist.

13. Turbomaschine (100), umfassend mindestens ein Schaufelrad nach Anspruch 11 oder 12.

## Claims

1. An assembly (1) comprising an airfoil (20) for a turbine engine rotor wheel and a platform (22) on which the airfoil is suitable for being mounted;
a plurality of said airfoils being suitable for being fastened to said platform or to a plurality of said platforms assembled together so as to form a rotor wheel (14) having a wheel axis (A) and defining upstream and downstream directions along that axis, the airfoils being arranged radially in the wheel;
in said wheel, the platform (22) or the assembled-together platforms present a surface (30) between the airfoils that is referred to as a platform surface and that radially defines the inside of gas-passing passages formed between the airfoils;
said platform surface presenting a circumferential depression (40) extending axially substantially between a leading edge of an airfoil at its upstream end and up to no more than 60% of an axial extent of the airfoil at its downstream end,
the assembly being **characterized in that**:
where a "skeleton curve" is the curve representing variations of a skeleton angle (α) of the airfoil in a section plane substantially parallel to the platform surface as a function of position along the axis of the wheel;
and where a "linearized skeleton curve" (45) is the curve representing variations of an angle as a function of position along the axis of the wheel that connects together in a straight line the points representing the skeleton angle respectively at 10% and at 90% of the axial extent of the airfoil from the leading edge;
in a vicinity of the platform, a lowered portion (44) of the skeleton curve lies under the linearized skeleton curve (45) extending axially over at least half of the axial extent (40R) of said depression.

2. An assembly according to claim 1, wherein the circumferential depression extends axially substantially between the leading edge at its upstream end and only 40% of the axial extent of the airfoil at its downstream end.

3. An assembly according to claim 1 or claim 2, wherein the deepest section of said depression (40) is situated axially in the range 15% to 35% of the axial extent of the airfoil from the leading edge of the airfoil.

4. An assembly according to any one of claims 1 to 3, wherein said platform surface presents a circumferential bulging area (42) situated axially in the downstream half of the airfoil.

5. An assembly according to any one of claims 1 to 4, wherein a most projecting section (43) of said bulging area is situated axially in the range 50% to 70% of the axial extent of the airfoil from the leading edge of the airfoil.

6. An assembly according to any one of claims 1 to 5, wherein, in said vicinity, the skeleton curve presents a raised portion (48) lying above the linearized skeleton angle curve and situated axially downstream from said lowered portion.

7. An assembly according to claim 6, wherein said raised portion (48) lies axially substantially level with said bulging area.

8. An assembly according to any one of claims 1 to 5, wherein the skeleton curve presents a slope of absolute value that is less than that of the linearized skeleton curve in the range 80% to 100%, and preferably in the range 60% to 100% of the axial extent of the airfoil from its leading edge.

9. An assembly according to any one of claims 1 to 8, wherein an upstream skeleton angle is the skeleton angle at the leading edge of the airfoil in a radially lower fourth of the airfoil, said upstream skeleton angle increasing in absolute value on approaching the airfoil root.

10. A turbine engine blade (18) constituted by an assembly according to any one of claims 1 to 9 and having a platform formed integrally with at least one airfoil.

11. A rotor wheel (14) for turbine engine formed with blades according to claim 10.

12. A rotor wheel (14) for turbine engine formed with at least one assembly according to any one of claims 1 to 9.

13. A turbine engine (100) including at least one rotor wheel according to claim 11 or claim 12.
